# EUROPEAN PATENT APPLICATION

(11) **EP 4 154 744 A1**
(43) Date of publication of application: **29.03.2023**
(21) Application number: 21812005.3
(22) Date of filing: 09.04.2021
(51) Int. Cl.: A24F 40/46, C03C 12/00

(54) **HEAT GENERATING BODY AND HEATING DEVICE**

(30) Priority: 27.05.2020 CN 202010461032
(71) Applicant: Shenzhen Smoore Technology Limited, Shenzhen, Guangdong 518102 (CN)
(72) Inventor: ZHOU, Hongming, Shenzhen, Guangdong 518102 (CN); LIU, Hua, Shenzhen, Guangdong 518102 (CN); XIAO, Junjie, Shenzhen, Guangdong 518102 (CN)
(74) Representative: Manitz Finsterwald Patent- und Rechtsanwaltspartnerschaft mbB
(86) International application number: PCT/CN2021/086071
(87) International publication number: WO 2021/238427

(57) **Abstract**

Provided are a heat generating body (10) and a heating device. The heat generating body (10) comprises a base body (110), a heat generating layer (120) arranged on the base body (110), and a protruding structure layer (140) arranged on the heat generating layer (120), wherein the protruding structure layer (140) comprises a plurality of protruding units (141) arranged on the heat generating layer (120) at intervals or the protruding structure layer (140) is in a grid shape.

## Description

### CROSS-REFERENCE TO RELATED APPLICATIONS

This application claims priority to Chinese Patent Application No. 2020104610327, entitled "HEATING BODY AND HEATING DEVICE" filed with the China National Intellectual Property Administration on May 27, 2020, which is incorporated herein by reference in its entirety.

### TECHNICAL FIELD

This application relates to the field of e-cigarette technologies, and in particular, to a heating body and a heating device.

### BACKGROUND

An e-cigarette is an electronic product that simulates a cigarette. The e-cigarette has appearance and taste similar to those of a cigarette, but usually does not contain harmful ingredient such as tar and suspended particulates in the cigarette. The e-cigarette mainly heats an e-liquid or tobacco through a heating body to release aromatic substances and nicotine in the e-liquid or tobacco and produce vapor that is close to the taste of a real cigarette.

A heat-not-burn cigarette device mainly heats tobacco at a low temperature of 200°C to 400°C to produce a vapor without a large amount of harmful substances caused by high temperature cracking. Currently, the heating method of the heat-not-burn cigarette device is mainly central heating or peripheral heating. The central heating has high heat efficiency and requires no heat insulation. However, a contact between the heating body and the tobacco cannot be avoided in the central heating. During the use of the heat-not-burn cigarette device using the central heating method, liquid substances that cannot be vaporized are precipitated while the tobacco is carbonized, and soot is inevitably formed. The soot tends to get adhered on the surface of the heating body and is difficult to clean. As a result, the smoking taste of the heat-not-burn cigarette device using the central heating method is likely to deteriorate after a period of use.

### SUMMARY

Embodiments of this application provide a heating body and a heating device.

A heating body includes a substrate, a heating layer arranged on the substrate, and a protruding structure layer arranged on the heating layer, where the protruding structure layer includes a plurality of protruding units spaced apart on the heating layer or the protruding structure layer has a grid shape.

The foregoing protruding structure layer of the heating body reduces a contact area between soot and the heating body, so that the heating body is not prone to soot adhesion. In addition, even if soot is adhered to the heating body, the soot can be easily wiped off.

In one of the embodiments, the heating body further includes an insulating and heat-conducting layer arranged between the protruding structure layer and the heating layer.

In one of the embodiments, a ratio of a height of the protruding structure layer to a distance between a side of the insulating and heat-conducting layer close to the protruding structure layer and a side of the substrate away from the heating layer is 1:5 to 500.

In one of the embodiments, an orthographic projection of the protruding unit onto the insulating and heat-conducting layer is circular, polygonal, elliptical, or sector-shaped.

In one of the embodiments, a height of the protruding structure layer is about 5 µm to about 500 µm.

In one of the embodiments, a width of the protruding structure layer is about 30 µm to about 900 µm.

In one of the embodiments, raw materials for preparing the protruding structure layer include, in parts by weight, 0.5 parts to 85 parts of glass powder, 0 parts to 35 parts of an inorganic filler, and 15 parts to 62 parts of an organic carrier.

In one of the embodiments, the raw materials for preparing the protruding structure layer include, in parts by weight, 30 parts to 80 parts of glass powder, 5 parts to 20 parts of the inorganic filler, and 15 parts to 60 parts of the organic carrier.

In one of the embodiments, the raw materials for preparing the protruding structure layer include, in parts by weight, 35 parts to 75 parts of glass powder, 8 parts to 16 parts of the inorganic filler, and 20 parts to 45 parts of the organic carrier.

In one of the embodiments, the glass powder includes, in percentage by weight, 10% to 60% of silicon oxide, 10% to 45% of boron oxide, 0.5% to 5% of aluminum oxide, 0 to 8% of calcium oxide, 2% to 15% of zinc oxide, 0 to 6% of magnesium oxide, 0 to 5% of titanium oxide, 0 to 12% of sodium oxide, 0 to 3% of potassium oxide, 0.2% to 4% of zirconium oxide, 0 to 3% of iron oxide, 0 to 2.5% of cobalt oxide, 0 to 4% of copper oxide, and 0 to 1% of manganese oxide.

In one of the embodiments, the inorganic filler is selected from at least one of silicon oxide, aluminum oxide, zirconium oxide, zinc oxide, calcium oxide, titanium oxide, silicon carbide, or diamond.

In one of the embodiments, the organic carrier includes: 1% to 10% of ethyl cellulose, 1% to 8% of acrylic resin, 2% to 10% of tributyl citrate, 20% to 60% of terpineol, 5% to 35% of butyl carbitol, 5% to 30% of butyl carbitol acetate, and 0 to 2% of dispersant.

In one of the embodiments, the glass powder includes, in percentage by weight, 25% to 60% of silicon oxide, 18% to 35% of boron oxide, 2% to 5% of aluminum oxide, 3% to 8% of calcium oxide, 5% to 15% of zinc oxide, 1% to 5% of magnesium oxide, 1% to 5% of titanium oxide, 6% to 12% of sodium oxide, 0 to 3% of potassium oxide, 0.2% to 4% of zirconium oxide, 1% to 3% of iron oxide, 0 to 2% of cobalt oxide, 1% to 4% of copper oxide, and 0 to 1% of manganese oxide.

In one of the embodiments, the organic carrier includes, in percentage by weight, 2% to 8% of ethyl cellulose, 1% to 6% of acrylic resin, 5% to 9% of tributyl citrate, 34% to 50% of terpineol, 17% to 30% of butyl carbitol, 12% to 20% of butyl carbitol acetate, and 1% to 2% of dispersant.

In one of the embodiments, the protruding structure layer is sintered after screen printing, and a temperature of the sintering is about 500°C to about 900°C.

In one of the embodiments, the glass powder includes, in percentage by weight, 25% to 50% of silicon oxide, 25% to 45% of boron oxide, 2% to 5% of aluminum oxide, 3% to 8% of calcium oxide, 5% to 12% of zinc oxide, 2% to 3% of magnesium oxide, 1% to 5% of titanium oxide, 8% to 12% of sodium oxide, 0 to 3% of potassium oxide, 1% to 4% of zirconium oxide, 1% to 3% of iron oxide, 0 to 2% of cobalt oxide, 2% to 3% of copper oxide, and 0 to 1% of manganese oxide.

In one of the embodiments, a heating body further includes a transition layer arranged between the substrate and the heating layer.

A heating device includes a base and the foregoing heating body, where the heating body is mounted on the base.

### BRIEF DESCRIPTION OF THE DRAWINGS

FIG. 1 is a partial cross-sectional view of a heating body according to an implementation.
FIG. 2 is a schematic diagram of the heating body shown in FIG. 1.
FIG. 3 is a schematic diagram of a heating body of another embodiment.
FIG. 4 is a schematic diagram of a heating body of another embodiment.

### DETAILED DESCRIPTION

For ease of understanding this application, the following provides a comprehensive description of this application with reference to the related accompanying drawings. Preferred implementations of this application are provided in the accompanying drawings. However, this application can be implemented in many different forms and is not limited to the implementations described herein. Rather, a purpose of providing the implementations is to provide a more thorough and complete understanding of a disclosure of this application.

It is to be noted that, when an element is described to be "fixed to" another element, that is, the element can be directly on the another element or there can be one or more intervening elements on the another element. When an element is described to be "connected to" another element, that is, the element can be directly connected to the other element or there can be one or more intervening elements on the other element. Orientation or position relationships indicated by terms such as "vertical", "horizontal", "left", "right", "upper", "lower", "inner", "outer", and "bottom" are based on orientation or position relationships shown in the accompanying drawings, and are used only for ease of description, rather than indicating or implying that the mentioned device or element need to have a particular orientation or need to be constructed and operated in a particular orientation. Therefore, such terms should not be construed as a limitation to the present invention.

Unless otherwise defined, all technologies and scientific terms used in this application is to have a general meaning understood by persons of ordinary skill in the art of this application. The terms used in the specification of this application are merely to describe a purpose of the specific embodiments, and are not intended to limit this application. The term "and/or" used in this application includes any or all combinations of one or more associated listed items.

An embodiment of this application provides a heating device. The heating device includes a heating body 10 and a base. The heating body 10 is mounted on the base. In a specific example, the heating device is a heat-not-burn cigarette device. In this case, the heating body 10 is configured to heat tobacco, so that the tobacco releases smoke.

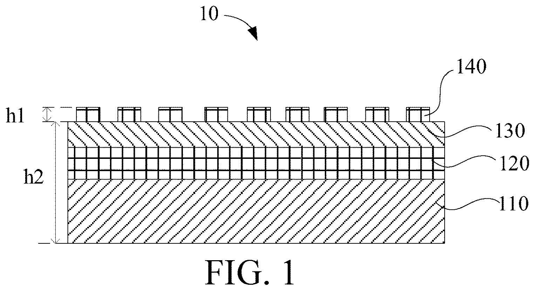

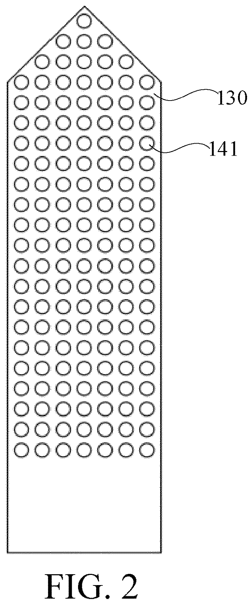

Referring to FIG. 1 and FIG. 2, the heating body 10 includes a substrate 110, a heating layer 120, an insulating and heat-conducting layer 130, and a protruding structure layer 140. The heating layer 120 is arranged on the substrate 110. The insulating and heat-conducting layer 130 is arranged on a side of the heating layer 120 away from the substrate 110. The protruding structure layer 140 is arranged on a side of the insulating and heat-conducting layer 130 away from the heating layer 120.

The substrate 110 is configured to support the heating layer 120, the insulating and heat-conducting layer 130, and the protruding structure layer 140 arranged on the insulating and heat-conducting layer 130. Specifically, the substrate 110 is a ceramic substrate. Further, the substrate 110 is a zirconium oxide ceramic substrate or an aluminum oxide ceramic substrate. In an optional specific example, the substrate 110 is the zirconium oxide ceramic substrate. Zirconium oxide ceramic features high strength and stiffness, high temperature resistance, and high chemical stability. Under a high temperature condition, the zirconium oxide ceramic is not easy to chemically react with substances stacked on the substrate 110, so that the heating body 10 can have high stiffness and a good heating effect. It is to be understood that, in some other embodiments, the substrate 110 is not limited to the ceramic substrate 110. The substrate may be another substrate 110 such as a stainless steel substrate or a glass substrate commonly used in the art. The stainless steel substrate 110 has good bending resistance and good heat conductivity. Certainly, when the substrate 110 is made of metal such as stainless steel, an insulating layer such as a glaze layer is provided between the substrate 110 and the heating layer.

In one of the embodiments, the shape of the substrate 110 is a sheet, a strip, a tube, a pot, a column, or a cone. Certainly, in some other embodiments, the shape of the substrate 110 is not limited to the foregoing, and may be in other shapes.

In one of the embodiments, the substrate 110 includes a body and a tip connected to the body. The width of the tip gradually decreases from an end close to the body to an end away from the body, so as to facilitate inserting to a tobacco. In an embodiment, the body is rectangular, and the tip is an isosceles triangle with a wide side of the body as a base.

In one of the embodiments, the shape of the substrate 110 is a sheet, and the thickness of the substrate 110 is about 0.1 mm to about 3 mm. Certainly, in some other embodiments, the thickness of the substrate 110 is not limited to the foregoing and may be adjusted according to actual needs.

The heating layer 120 is configured for heating. Specifically, the heating method of the heating layer 120 can be resistive heating or electromagnetic induction heating.

In one of the embodiments, the heating method of the heating layer 120 is resistive heating. Specifically, the heating layer 120 includes a heating circuit and a conductive circuit electrically connected to the heating circuit. The heating circuit is configured for heating, and the conductive circuit is configured to electrically connect a power supply and the heating circuit. The conductive circuit is formed by screen printing a paste that contains low resistivity metal. The heating circuit uses a material with high resistivity and a temperature coefficient of resistance. Further, the material of the conductive circuit is selected from one of copper, silver, and aluminum. The material of the heating circuit is selected from one of silver, palladium-silver alloy, platinum, nickel, and tungsten. Certainly, in some other embodiments, the materials of the conductive circuit and the heating circuit are not limited to the foregoing, and may be other materials.

In one of the embodiments, an orthographic projection of the heating layer 120 onto the substrate 110 is S-shaped, U-shaped or polygonal. Certainly, the shape of the heating layer 120 is not limited to the foregoing, and may be another shape.

In one of the embodiments, the thickness of the heating layer 120 is about 3 µm to about 100 µm. Further, the thickness of the heating layer 120 is about 10 m to about 70 µm. Certainly, in other embodiments, the thickness of the heating layer 120 is not limited to the foregoing, and may be adjusted according to actual needs.

The insulating and heat-conducting layer 130 is configured for insulation and heat conduction and can also protect the heating layer 120. In one of the embodiments, the insulating and heat-conducting layer 130 is a glass glaze layer with a thermal expansion coefficient of 9×10⁻⁶ (1/K) to 13×10⁻⁶ (1/K). Certainly, the insulating and heat-conducting layer 130 is not limited to the glass glaze layer with a thermal expansion coefficient of 9×10⁻⁶ (1/K) to 13×10⁻⁶ (1/K). The material of the insulating and heat-conducting layer 130 may be adjusted according to actual situation in some other embodiments.

In one of the embodiments, the insulating and heat-conducting layer 130 further has an anti-adhesion capability. That is, the material of the insulating and heat-conducting layer 130 is a high-temperature-resistant material that is insulating, heat-conducting, and anti-adhesive.

In one of the embodiments, the thickness of the insulating and heat-conducting layer 130 is about 15 µm to about 300 µm. Further, the thickness of the insulating and heat-conducting layer 130 is about 30 µm to about 180 µm. It is to be understood that, in other embodiments, the thickness of the insulating and heat-conducting layer 130 is not limited to the foregoing, and may be adjusted according to actual needs. It should to be noted that, in some embodiments, the insulating and heat-conducting layer 130 may be omitted. In this case, the side of the heating layer 120 close to the protruding structure layer 140 has no conductivity.

The protruding structure layer 140 reduces a contact area between the heating body 10 and soot, thereby reducing an adhesive force between the heating body 10 and soot, so that a surface of the heating body 10 is not prone to soot adhesion, and a cigarette can be plugged in and out smoothly. In addition, even if the soot is adhered to the heating body 10 with the protruding structure layer 140, it is easier to be wiped, and damage caused to the heating body 10 by wiping can be reduced, thereby prolonging the service life of the heating body 10. In addition, due to the arrangement of the protruding structure layer 140, the surface of the heating body 10 is not prone to soot adhesion, thereby reducing the impact of the soot on the temperature field of the heating body 10, so that heat is better transferred to tobacco, the tobacco is heated more evenly, and the taste consistency is improved during long term use.

In one of the embodiments, the protruding structure layer 140 includes a plurality of protruding units 141 spaced apart on the insulating and heat-conducting layer 130. It is to be understood that, in some other embodiments, the protruding structure layer 140 may have a grid shape.

In one of the embodiments, a ratio of the height of the protruding structure layer 140 (the height of the protruding structure layer 140 refers to the distance from the side of the protruding structure layer 140 away from the insulating and heat-conducting layer 130 to the side of the protruding structure layer 140 close to the insulating layer, that is, hl in FIG. 1) to a distance between the side of the insulating and heat-conducting layer 130 close to the protruding structure layer 140 and the side of the substrate 110 away from the heating layer 120 (that is, h2 in FIG. 1) is 1:(5-500). Further, the ratio of the height of the protruding structure layer 140 to the distance between the side of the insulating and heat-conducting layer 130 close to the protruding structure layer 140 and the side of the substrate 110 away from the heating layer 120 is 1:(5-300). Furthermore, the ratio of the height of the protruding structure layer 140 to the distance between the side of the insulating and heat-conducting layer 130 close to the protruding structure layer 140 and the side of the substrate 110 away from the heating layer 120 is 1:(20 to 200).

In one of the embodiments, the height of the protruding structure layer 140 is about 5 µm to about 500 µm. Further, the height of the protruding structure layer 140 is about 15 µm to about 280 µm.

In one of the embodiments, the width of the protruding structure layer 140 is about 30 µm to about 900 µm. Further, the width of the protruding structure layer 140 is about 80 µm to about 600 µm.

In one of the embodiments, an orthographic projection of the protruding unit 141 onto the insulating and heat-conducting layer 130 is circular, polygonal (for example, rhombic or rectangular), elliptical, or sector-shaped. Certainly, in other embodiments, the shape of the orthographic projection of the protruding unit 141 onto the insulating and heat-conducting layer 130 is not limited to the foregoing, and may be another shape.

In the embodiment shown in FIG. 2, the protruding structure layer 140 consists of a plurality of protruding units 141 spaced apart on the insulating and heat-conducting layer 130. Orthographic projections of the plurality of protruding units 141 onto the insulating and heat-conducting layer 130 are all circular, and the plurality of protruding units 141 are equally spaced. It is to be understood that, in some other embodiments, the protruding structure layer 140 may be a grid shape.

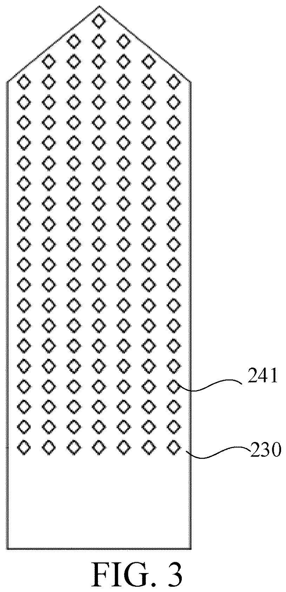

In the embodiment shown in FIG. 3, the protruding structure layer 140 consists of a plurality of protruding units 241 spaced apart on the insulating and heat-conducting layer 230. Orthographic projections of the plurality of protruding units 241 onto the insulating and heat-conducting layer 230 are all rhombic.

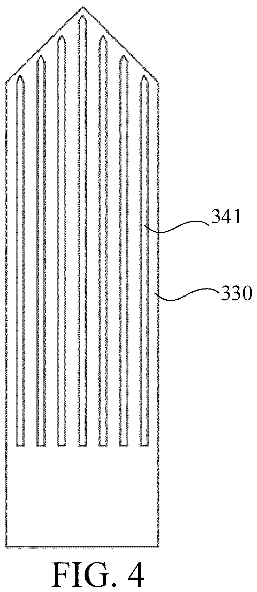

In the embodiment shown in FIG. 4, the protruding structure layer 140 consists of a plurality of protruding units 341 spaced apart the insulating and heat-conducting layer 330. Orthographic projections of the plurality of protruding units 341 onto the insulating and heat-conducting layer 330 are all elongated, and each protruding unit 341 extends in an extension direction of the heating body 10.

In one of the embodiments, the height of the protruding unit 141 is about 5 µm to about 500 µm, the width of the protruding unit 141 is about 30 µm to about 900 µm, and the length of the protruding unit 141 is about 30 µm to about 900 µm. Further, the height of the protruding unit 141 is about 5 µm to about 500 µm, the width of the protruding unit 141 is about 80 µm to about 600 µm, and the length of the protruding unit 141 is about 80 µm to about 600 µm.

In one of the embodiments, raw materials for preparing the protruding structure layer 140 include, in parts by weight, 0.5 parts to 85 parts of glass powder, 0 parts to 35 parts of an inorganic filler, and 15 parts to 62 parts of organic carrier. A surface of the protruding structure layer 140 prepared according to the foregoing composition has lower surface energy, making the surface not prone to soot adhesion.

Specifically, the glass powder includes, in percentage by weight, 10% to 60% of silicon oxide, 10% to 45% of boron oxide, 0.5% to 5% of aluminum oxide, 0 to 8% of calcium oxide, 2% to 15% of zinc oxide, 0 to 6% of magnesium oxide, 0 to 5% of titanium oxide, 0 to 12% of sodium oxide, 0 to 3% of potassium oxide, 0.2% to 4% of zirconium oxide, 0 to 3% of iron oxide, 0 to 2.5% of cobalt oxide, 0 to 4% of copper oxide, and 0 to 1% of manganese oxide. Further, the glass powder includes, in percentage by weight, 25% to 60% of silicon oxide, 18% to 35% of boron oxide, 2% to 5% of aluminum oxide, 3% to 8% of calcium oxide, 5% to 15% of zinc oxide, 1% to 5% of magnesium oxide, 1% to 5% of titanium oxide, 6% to 12% of sodium oxide, 0 to 3% of potassium oxide, 0.2% to 4% of zirconium oxide, 1% to 3% of iron oxide, 0 to 2% of cobalt oxide, 1% to 4% of copper oxide, and 0 to 1% of manganese oxide. Furthermore, the glass powder includes, in percentage by weight, 25% to 50% of silicon oxide, 25% to 45% of boron oxide, 2% to 5% of aluminum oxide, 3% to 8% of calcium oxide, 5% to 12% of zinc oxide, 2% to 3% of magnesium oxide, 1% to 5% of titanium oxide, 8% to 12% of sodium oxide, 0 to 3% of potassium oxide, 1% to 4% of zirconium oxide, 1% to 3% of iron oxide, 0 to 2% of cobalt oxide, 2% to 3% of copper oxide, and 0 to 1% of manganese oxide. The glass powder prepared according to the foregoing composition and ratios can make the surface of the protruding structure layer 140 smooth and not prone to soot adhesion and have a color similar to soot to appear relatively clean even if soot is adhered.

In one of the embodiments, in parts by weight, 30 parts to 80 parts of glass powder are used. Furthermore, in parts by weight, 30 parts, 45 parts, 50 parts, 60 parts, or 80 parts of glass powder are used.

The inorganic filler is selected from at least one of silicon oxide, aluminum oxide, zirconium oxide, zinc oxide, calcium oxide, titanium oxide, silicon carbide, or diamond. Further, the inorganic filler is selected from one of silicon oxide, aluminum oxide, zirconium oxide, zinc oxide, calcium oxide, titanium oxide, silicon carbide, and diamond.

In one of the embodiments, in parts by weight, 5 parts to 20 parts of the inorganic filler are used. Further, 5 parts, 8 parts, 10 parts, 15 parts, or 20 parts of the inorganic filler are used.

Specifically, the organic carrier includes, in percentage by weight, 1% to 10% of ethyl cellulose, 1% to 8% of acrylic resin, 2% to 10% of tributyl citrate, 20% to 60% of terpineol, 5% to 35% of butyl carbitol, 5% to 30% of butyl carbitol acetate, and 0 to 2% of dispersant. Further, the organic carrier includes, in percentage by weight, 2% to 8% of ethyl cellulose, 1% to 6% of acrylic resin, 5% to 9% of tributyl citrate, 34% to 50% of terpineol, 17% to 30% of butyl carbitol, 12% to 20% of butyl carbitol acetate, and 1% to 2% of dispersant.

In one of the embodiments, in parts by weight, 15 parts to 60 parts of the organic carrier are used. Further, in parts by weight, 15 parts, 25 parts, 30 parts, 48 parts, or 60 parts of the organic carrier are used.

In one of the embodiments, the raw materials for preparing the protruding structure layer 140 include 30 parts to 80 parts of glass powder, 5 parts to 20 parts of the inorganic filler, and 15 parts to 60 parts of the organic carrier. Further, the raw materials for preparing the protruding structure layer 140 include 35 parts to 75 parts of glass powder, 8 parts to 16 parts of the inorganic filler, and 20 parts to 45 parts of the organic carrier. The protruding structure layer 140 made of raw materials prepared according to the foregoing composition and ratios can provide a smooth surface that is not prone to soot adhesion.

In one of the embodiments, the raw materials for preparing the protruding structure layer 140 include 30 parts of glass powder, 8 parts of zirconium oxide, and 62 parts of the organic carrier. In another embodiment, the raw materials for preparing the protruding structure layer 140 include 80 parts of glass powder, 5 parts of zirconium oxide, and 15 parts of the organic carrier. In another embodiment, the raw materials for preparing the protruding structure layer 140 include 50 parts of glass powder, 20 parts of zirconium oxide, and 30 parts of the organic carrier.

In one of the embodiments, the protruding structure layer 140 is formed by sintering after molding. Specifically, a method for molding the protruding structure layer 140 is screen printing. During screen printing, the size of the protruding structure layer 140 is controlled by the size of a screen pattern. In this case, in some embodiments, the raw materials for preparing the protruding structure layer 140 further include water to form paste. Specifically, the raw materials for preparing the protruding structure layer 140 are made into the paste, then a pattern is printed, and the protruding structure layer 140 is obtained by sintering. Certainly, in some embodiments, the raw materials of the protruding structure layer 140 may not include water. In this case, the raw materials of the protruding structure layer 140 may be directly made into the paste

Further, a temperature of the sintering is about 500°C to about 900°C. Preferably, the temperature of the sintering is about 600°C to 850°C. Further, the temperature of the sintering is 650°C, 700°C, 800°C, or 850°C. Through sintering at the foregoing temperature of the sintering, the protruding structure layer 140 can have characteristics of a smooth surface and being not prone to soot adhesion.

Certainly, it is to be understood that, in a method for preparing the protruding structure layer 140, a molding method is not limited to the foregoing screen printing, and molding may be performed by using another method such as spraying, coating, or mold pressing commonly used in the art. When the protruding structure layer 140 is prepared by using spraying, the size of the protruding structure layer 140 is determined by the size of solid particles in the paste.

In one of the embodiments, the shape of the substrate 110 is a sheet. Two heating layers 120, two insulating and heat-conducting layers 130 and two protruding structure layers 140 are provided. In this case, the two heating layers 120 are respectively arranged on two opposite surfaces of the substrate 110. One insulating and heat-conducting layer 130 is arranged on one of the heating layers 120, and the other insulating and heat-conducting layer 130 is arranged on the other heating layer 120. One protruding structure layer 140 is arranged on one of the insulating and heat-conducting layers 130, and the other protruding structure layer 140 is arranged on the other insulating and heat-conducting layer 130. That is, the heating layer 120, the insulating and heat-conducting layer 130 and the protruding structure layer 140 are alternatively stacked on the two opposite surfaces of the substrate 110.

Certainly, in other embodiments, one heating layer 120, two insulating and heat-conducting layers 130, and two protruding structure layers 140 may be provided. In this case, one insulating and heat-conducting layer 130 is arranged on the heating layer 120, and one protruding structure layer 140 is arranged on the insulating and heat-conducting layer 130; and the other insulating and heat-conducting layer 130 is arranged on the side of the substrate 110 away from the heating layer 120, and the other protruding structure layer 140 is arranged on the insulating and heat-conducting layer 130.

In one of the embodiments, the heating body 10 further includes a transition layer. Specifically, the transition layer is arranged between the substrate 110 and the heating layer 120 and is configured to increase a binding force between the heating layer 120 and the substrate 110.

In one of the embodiments, the heating body 10 further includes a dielectric layer. Specifically, the dielectric layer is arranged between the heating layer 120 and the insulating and heat-conducting layer 130 and is configured to increase the binding force between the heating layer 120 and the insulating and heat-conducting layer 130. In this case, if the dielectric layer has an insulating function, the insulating and heat-conducting layer 130 may not necessarily have an insulating function.

The base is configured to support the heating body 10. In one of the embodiments, the heating body 10 is detachably connected to the base. In another embodiment, the heating body 10 is fixedly connected to the base.

In one of the embodiments, the foregoing heating device further includes a power supply. The power supply is configured to supply power to the heating body 10. Specifically, the power supply is arranged in the base. Certainly, in some other embodiments, the power supply may be arranged outside the base. For example, the power supply may be arranged close to the base.

The foregoing heating device has at least the following advantages:
(1) The foregoing heating device has a longer service life. The foregoing heating device includes the foregoing heating body 10. The protruding structure layer 140 on the heating body 10 reduces a contact area between soot and the heating body 10, so that the heating body 10 is not prone to soot adhesion, and even if soot is adhered, the soot can be easily wiped off. Therefore, the foregoing heating device is not prone to damage and has a longer service life.
(2) The foregoing heating device has high taste consistency during use. After long-term use, the temperature field of a heating body of a conventional heating device is damaged due to the adhesion of a large amount of soot on a surface of the heating body. As a result, the transferring of temperature to tobacco is affected, and eventually the taste of the tobacco is spoiled. The heating body 10 of the foregoing heating device has the protruding structure layer 140 arranged on the insulating and heat-conducting layer 130. The protruding structure layer 140 greatly reduces the adhesion of massive soot, thereby reducing the impact of soot on the temperature field of the heating body 10 and providing high taste consistency of the foregoing heating device.
(3) When the foregoing heating device is in use, a cigarette is plugged in and out more smoothly. The surface of the heating body 10 of the foregoing heating device is not prone to soot adhesion. A cross-section of the heating body 10 does not increase significantly, and during the insertion of a cigarette, the resistance of a cigarette does not increase significantly. In addition, because an adhesive force between the tobacco and the heating body 10 having the protruding structure layer 140 is small, there is no obvious blockage in pulling out a cigarette, and the cigarette can be plugged in and out smoothly.
(4) The heating body 10 of the foregoing heating device is more aesthetic. The heating body 10 is not prone to soot adhesion and is cleaner during use.

### Specific embodiments

The following provides a detailed description with reference to specific embodiments. Without special instructions, the following embodiments do not include other components except unavoidable impurities. Without special instructions, drugs and instruments used in the embodiments are all conventional selections in the art. Experimental methods for which specific conditions are not indicated in the embodiments are implemented according to conventional conditions, such as the conditions described in literatures, books or methods recommended by manufacturers. The number of parts in each embodiment is the number of parts by mass.

### Embodiment 1

A heating body provided in Embodiment 1 is a resistive heating body, and is formed by a substrate, a heating layer, an insulating and heat-conducting layer, and a protruding structure layer. The material of the substrate is 430 stainless steel. The shape of the substrate is a sheet, and the thickness of the substrate is about 0.5 mm.

The heating layer is stacked on the substrate. The insulating and heat-conducting layer is stacked on the heating layer. The protruding structure layer is formed by a plurality of protruding units arranged on the side of the insulating and heat-conducting layer away from the heating layer at intervals. The plurality of protruding units are all cylinders with a diameter of 300 µm and a height of 50 µm. The material of the heating layer is palladium-silver alloy, and the thickness of the heating layer is 25 µm. The material of the insulating and heat-conducting layer is glass glaze, and the thickness of the insulating and heat-conducting layer is 50 µm. The protruding structure layer is formed by sintering at 800°C after screen printing of paste made of raw materials.

The raw materials for preparing the protruding structure layer are formed by 80 parts of glass powder, 5 parts of aluminum oxide, and 15 parts of the organic carrier. the components of the glass powder are, in percentage by weight, 50% of silicon oxide, 23% of boron oxide, 2% of aluminum oxide, 3% of calcium oxide, 5% of zinc oxide, 2% of magnesium oxide, 1% of titanium oxide, 8% of sodium oxide, 1% of potassium oxide, 1% of zirconium oxide, 1% of iron oxide, 1% of cobalt oxide, and 2% of copper oxide. the components of the organic carrier are, in percentage by weight, 8% of ethyl cellulose, 2% of acrylic resin, 10% of tributyl citrate, 50% of terpineol, 17% of butyl carbitol, 12% of butyl carbitol acetate, and 1% of dispersant.

### Embodiment 2

A heating body provided in Embodiment 2 is a resistive heating body, and is formed by a substrate, a heating layer, an insulating and heat-conducting layer and a protruding structure layer. The material of the substrate is an aluminum oxide ceramic. The shape of the substrate is a rod, and the thickness of the substrate is about 3 mm. The heating layer is stacked on the substrate. The insulating and heat-conducting layer is stacked on the heating layer. The protruding structure layer is formed by a plurality of protruding units arranged on the side of the insulating and heat-conducting layer away from the heating layer at intervals. The width of each protruding unit is 30 µm to 100 µm, and the height of the protruding unit is 5 µm to 30 µm. The material of the heating layer is silver-platinum alloy, and the thickness of the heating layer is 15 µm. The material of the insulating and heat-conducting layer 130 is a glass ceramic, and the thickness of the insulating and heat-conducting layer is 100 µm. The protruding structure layer is formed by sintering at 700°C after spraying of paste made of raw materials.

The raw materials for preparing the protruding structure layer are formed by 30 parts of glass powder, 8 parts of zirconium oxide, and 62 parts of the organic carrier. the components of the glass powder are, in percentage by weight, 40% of silicon oxide, 30% of boron oxide, 5% of aluminum oxide, 4% of calcium oxide, 4% of zinc oxide, 3% of magnesium oxide, 10% of sodium oxide, 1% of iron oxide, and 3% of copper oxide. the components of the organic carrier are, in percentage by weight, 2% of ethyl cellulose, 1% of acrylic resin, 8% of tributyl citrate, 45% of terpineol, 20% of butyl carbitol, 13% of butyl carbitol acetate, and 1% of dispersant.

### Embodiment 3

A heating body provided in Embodiment 3 is an electromagnetic induction heating body. The heating body is formed by a substrate, a heating layer, an insulating and heat-conducting layer, and a protruding structure layer. The material of the substrate is a zirconium oxide ceramic. The shape of the substrate is a sheet, and the thickness of the substrate is 1 mm. The heating layer is stacked on the substrate. The insulating and heat-conducting layer is stacked on the heating layer. The protruding structure layer is formed by a plurality of protruding units arranged on the side of the insulating and heat-conducting layer away from the heating layer at intervals. The shape of each protruding unit is a strip with a length of 15 mm, and the width of 200 µm and a height of 100 µm. The material of the heating layer is silver-nickel alloy, and the thickness of the heating layer is 80 µm. The material of the insulating and heat-conducting layer is a glass ceramic, and the thickness of the insulating and heat-conducting layer is 20 µm. Paste made of raw materials is dried at 120°C, placed in a rubber mold with grooves on the surface, and then subjected to isostatic pressing molding and formed by sintering at 850°C to form the protruding structure layer.

The raw materials for preparing the protruding structure layer are formed by 50 parts of glass powder, 20 parts of silicon oxide and 30 parts of the organic carrier. the components of the glass powder are, in percentage by weight, 25% of silicon oxide, 35% of boron oxide, 4% of aluminum oxide, 5% of calcium oxide, 12% of zinc oxide, 2% of magnesium oxide, 12% of sodium oxide, 3% of iron oxide, and 2% of copper oxide. the components of the organic carrier are, in percentage by weight, 4% of ethyl cellulose, 6% of acrylic resin, 5% of tributyl citrate, 34% of terpineol, 30% of butyl carbitol, 20% of butyl carbitol acetate, and 1% of dispersant.

### Comparative Example 1

The structure of the heating body in Comparative example 1 is substantially the same as that of the heating body of Embodiment 1. The difference is that raw materials of the protruding structure layer in Comparative example 1 are different from those of Embodiment 1. The raw materials of the protruding structure layer in Comparative example 1 are formed by 30 parts of glass powder, 40 parts of aluminum oxide, and 30 parts of the organic carrier.

### Test

The anti-adhesion capability to soot in the embodiments and Comparative example 1 are tested by using a weight increase method (that is, an amount of adhered soot is determined by comparing weights of the heating body before and after smoking to obtain an increase). Specific steps are:
weighing the heating body with an electronic balance before smoking; and then weighing the heating body again after 20 cigarettes are smoked, where the weight of soot adhered to the heating body is equal to a difference of subtracting the weight of the heating body before smoking from the weight of the heating body after 20 cigarettes are smoked.

The test results of the embodiments and Comparative example 1 are shown in Table 1.

**Table 1**

| Group | Weight of adherent soot after 20 cigarettes are smoked (µg) |
|---|---|
| Embodiment 1 | 36.3 |
| Embodiment 2 | 43.2 |
| Embodiment 3 | 53.6 |
| Comparative Example 1 | 503.4 |

From the foregoing table, it can be seen that the heating body of Embodiments 1 to 3 have a strong anti-adhesion capability to the soot.

The technical features of the foregoing embodiments can be described in any combination. For the sake of brevity, not all possible combinations of the technical features in the foregoing embodiments are described herein. However, as long as there is no contradiction between the combinations of the technical features, all the combinations should be within the recorded scope in this specification.

The foregoing embodiments only show several implementations of this application, and the descriptions thereof are relatively specific and detailed, but should not be construed as a limitation to the scope of the patent application. It should be noted that several modifications and improvements without departing from the concept of this application that can be made by a person of ordinary skill in the art can still make fall within the protection scope of this application. Therefore, the protection scope of the patent in this application shall be subject to the claims.

## Claims

1. A heating body, comprising a substrate, a heating layer arranged on the substrate, and a protruding structure layer arranged on the heating layer, wherein the protruding structure layer comprises a plurality of protruding units spaced apart on the heating layer, or wherein the protruding structure layer has a grid shape.

2. The heating body according to claim 1, further comprising an insulating and heat-conducting layer arranged between the protruding structure layer and the heating layer.

3. The heating body according to claim 2, wherein a ratio of a height of the protruding structure layer to a distance between a side of the insulating and heat-conducting layer close to the protruding structure layer and a side of the substrate away from the heating layer is 1:5 to 500.

4. The heating body according to claim 2, wherein an orthographic projection of the protruding unit onto the insulating and heat-conducting layer is circular, polygonal, elliptical, or sector-shaped.

5. The heating body according to claim 1, wherein a height of the protruding structure layer is about 5 µm to about 500 µm.

6. The heating body according to claim 1, wherein a width of the protruding structure layer is about 30 µm to about 900 µm.

7. The heating body according to any one of claims 1 to 6, wherein raw materials for preparing the protruding structure layer comprise, in parts by weight, 0.5 parts to 85 parts of glass powder, 0 parts to 35 parts of an inorganic filler, and 15 parts to 62 parts of an organic carrier.

8. The heating body according to claim 7, wherein the raw materials for preparing the protruding structure layer comprise, in parts by weight, 30 parts to 80 parts of glass powder, 5 parts to 20 parts of the inorganic filler, and 15 parts to 60 parts of the organic carrier.

9. The heating body according to claim 7, wherein the raw materials for preparing the protruding structure layer comprises, in parts by weight, 35 parts to 75 parts of glass powder, 8 parts to 16 parts of the inorganic filler, and 20 parts to 45 parts of the organic carrier.

10. The heating body according to claim 7, wherein the glass powder comprises, in percentage by weight, 10% to 60% of silicon oxide, 10% to 45% of boron oxide, 0.5% to 5% of aluminum oxide, 0 to 8% of calcium oxide, 2% to 15% of zinc oxide, 0 to 6% of magnesium oxide, 0 to 5% of titanium oxide, 0 to 12% of sodium oxide, 0 to 3% of potassium oxide, 0.2% to 4% of zirconium oxide, 0 to 3% of iron oxide, 0 to 2.5% of cobalt oxide, 0 to 4% of copper oxide, and 0 to 1% of manganese oxide.

11. The heating body according to claim 7, wherein the inorganic filler is at least one selected from the group consisting of silicon oxide, aluminum oxide, zirconium oxide, zinc oxide, calcium oxide, titanium oxide, silicon carbide, and diamond.

12. The heating body according to claim 7, wherein the organic carrier comprises: 1% to 10% of ethyl cellulose, 1% to 8% of acrylic resin, 2% to 10% of tributyl citrate, 20% to 60% of terpineol, 5% to 35% of butyl carbitol, 5% to 30% of butyl carbitol acetate, and 0 to 2% of dispersant.

13. The heating body according to claim 7, wherein the glass powder comprises, in percentage by weight, 25% to 60% of silicon oxide, 18% to 35% of boron oxide, 2% to 5% of aluminum oxide, 3% to 8% of calcium oxide, 5% to 15% of zinc oxide, 1% to 5% of magnesium oxide, 1% to 5% of titanium oxide, 6% to 12% of sodium oxide, 0 to 3% of potassium oxide, 0.2% to 4% of zirconium oxide, 1% to 3% of iron oxide, 0 to 2% of cobalt oxide, 1% to 4% of copper oxide, and 0 to 1% of manganese oxide.

14. The heating body according to claim 7, wherein the organic carrier comprises, in percentage by weight, 2% to 8% of ethyl cellulose, 1% to 6% of acrylic resin, 5% to 9% of tributyl citrate, 34% to 50% of terpineol, 17% to 30% of butyl carbitol, 12% to 20% of butyl carbitol acetate, and 1% to 2% of dispersant.

15. The heating body according to claim 7, wherein the protruding structure layer is formed by sintering after screen printing, and a temperature of the sintering is about 500°C to about 900°C.

16. The heating body according to claim 7, wherein the glass powder comprises, in percentage by weight, 25% to 50% of silicon oxide, 25% to 45% of boron oxide, 2% to 5% of aluminum oxide, 3% to 8% of calcium oxide, 5% to 12% of zinc oxide, 2% to 3% of magnesium oxide, 1% to 5% of titanium oxide, 8% to 12% of sodium oxide, 0 to 3% of potassium oxide, 1% to 4% of zirconium oxide, 1% to 3% of iron oxide, 0 to 2% of cobalt oxide, 2% to 3% of copper oxide, and 0 to 1% of manganese oxide.

17. The heating body according to claim 1, further comprising a transition layer arranged between the substrate and the heating layer.

18. A heating device, comprising a base and the heating body according to claim 1, wherein the heating body is mounted on the base.
